# EUROPEAN PATENT APPLICATION

(11) **EP 1 096 453 A2**
(43) Date of publication of application: **02.05.2001**
(21) Application number: 00309404.2
(22) Date of filing: 25.10.2000
(51) Int. Cl.: G08C 17/00, G08C 23/00

(54) **Remote-control system**

(30) Priority: 26.10.1999 JP 30413699
(71) Applicant: CANON KABUSHIKI KAISHA, Tokyo (JP)
(72) Inventor: Aratani, Shutaro, Tokyo (JP)
(74) Representative: Beresford, Keith Denis Lewis

(57) **Abstract**

The present application proposes a remote-control system including a remote-control device and an apparatus to be controlled. The remote-control device has a plurality of operation keys assigned to different functions and each having first and second ON states. The apparatus displays functions of the operation keys in response to that any one of the operation keys is set in the first ON state. When any one of the operation keys is set in the second ON state, the apparatus executes a function assigned to this operation key in the second ON state.

## Description

### BACKGROUND OF THE INVENTION

### Field of the Invention

The present invention relates to a remote-control system and, more particularly, to control of an apparatus by a remote commander having various functions.

### Related Background Art

With the advance of digital signal processing technologies, technologies have appeared which can connect video and information apparatuses such as a television set, VTR, and digital satellite tuner by cables in a house and transmit multimedia data such as video, audio, and control data through these cables. Such technologies are called high-speed serial bus technologies. Among these technologies, various products based on the IEEE1394 standard have been put into practical use.

When a home multimedia network based on an IEEE1394 serial bus is built in a house, images received by one satellite broadcasting tuner can be enjoyed on any TV in the house. Also, images reproduced by one VTR can be enjoyed on any TV. That is, new forms of use and advantages which conventionally do not exist are obtained.

Accordingly, television receivers are also required to have new functions. That is, devices serving as video data sources, such as a DVD video player and digital TV tuner, are not necessarily installed near a television receiver, i.e., in a room of a user watching the television receiver. Therefore, it is desired to be able to perform those operations such as "playback", "record", and "stop" via a television receiver, which are conventionally performed directly on each device. More specifically, an environment in which a user can operate individual devices by using a television receiver as a user interface with these devices is desired.

A large obstacle exists in achieving such new functional requirements for a television receiver: an increase in the number of keys of a remote controller as the center of the user interface and the resultant difficulty in operation. Many television remote controllers currently available on the market have television receiver control keys and VTR operation keys. Some remote controllers already have 30 keys or more and hence cannot be easily used by inexperienced users, elderly people, and children.

It is, therefore, very difficult to add new functions to television receivers by using the user interface currently being used, so a new conception has been required. As a user interface for operating a device having many functions by using a simple remote controller, it is possible to display a menu window or an operation panel on the display screen and perform selection by using up, down, left, and right cursor keys and a confirmation key.

In a user interface of this type, however, a user must press the cursor keys several times during one selecting operation. This increases the number of times the user presses remote-control keys before he or she completes the desired processing, resulting in a relatively time-consuming operation.

A method of dynamically changing functions assigned to remote-control keys is another user interface for realizing multiple functions. Such user interfaces are disclosed in Japanese Laid-Open Patent Application Nos. 9-149329 and 10-108144. In these technologies, channel numbers are dynamically assigned to remote-control keys, and a window showing functions assigned to the individual keys is displayed.

In these technologies, however, when a user operates a remote controller and a television receiver displays a menu window, operation panel, or window showing functions assigned to remote-control keys, this display hides a portion of a program image. Therefore, when nothing is input from the remote controller for a predetermined time, the display of the operation panel or the key assignment window is stopped.

If, however, the window showing the assignment of the remote-control keys is erased, the user may forget which key is assigned with which function, and may press a wrong key by mistake. No proposal for preventing such mistake has been made so far.

Also, by dynamically assigning functions to remote-control keys, a larger number of functions than the number of the keys can be realized. However, no proposal has been conventionally made which can achieve both diverse functions and the ease of use in the home network environment.

Furthermore, to realize various functions by using a remote controller, the number of remote-control keys must be increased. Hence, when the number of realizable functions increases, the number of remote-control keys increases proportionally. Additionally, when the number of remote-control keys increases, the possibility of operation errors also largely increases.

### SUMMARY OF THE INVENTION

It is a concern of the present invention to solve the above conventional problems.

It is another concern of the present invention to execute various control operations and processes without increasing the number of keys of a remote controller.

It is still another concern of the present invention to allow control by a remote controller without any operation errors.

According to one aspect of the present invention, there is provided an apparatus controlled by an operation device including a plurality of operation keys assigned to different functions and each having first and second ON states, comprising detecting means for detecting operation states of the plurality of keys, display control means for controlling a display operation of a display device on the basis of a detection result from the detecting means, the display control means controlling the display device to display information indicating functions of the plurality of operation keys in response to that any one of the plurality of operation keys is set in the first ON state, and operation control means for controlling an operation of the apparatus in accordance with a detection result from the detecting means, wherein in response to that any one of the plurality of operation keys is set in the second ON state, the operation control means controls an operation of the apparatus so as to execute a function assigned to the operation key in the second ON state.

Other features and advantages of the invention will become apparent from the following detailed description taken in conjunction with the accompanying drawings.

### BRIEF DESCRIPTION OF THE DRAWINGS

Fig. 1 is a view showing a home network and equipments constituting the network according to one embodiment of the present invention;
Fig. 2 is a block diagram showing an outline of the arrangement of a television receiver of this embodiment;
Fig. 3 is a view showing the arrangement of keys of a wireless remote controller of this embodiment;
Fig. 4 is a view showing a list of codes corresponding to the individual keys of the wireless remote controller;
Fig. 5 is a view showing the configuration of software running on a microcomputer;
Figs. 6A, 6B and 6C are views showing examples of remote-control guides when a television picture is displayed;
Fig. 7 is a flow chart showing the operation of a remote-control guide control program when a television picture is displayed;
Fig. 8 is a view showing a remote-control guide display example during equipment selection;
Fig. 9 is a flow chart showing the operation of a remote-control guide control program for equipment selection;
Figs. 10A and 10B are views showing examples of remote-control guides for operating a VTR;
Fig. 11 is a flow chart showing the operation of a remote-control guide control program for operating an equipment;
Fig. 12 is a flow chart showing the operation of the remote-control guide control program for operating an equipment;
Figs. 13A and 13B are views showing remote-control guide display examples when an EPG is displayed; and
Fig. 14 is a flow chart showing the operation of a remote-control guide control program for displaying an EPG.

### DETAILED DESCRIPTION OF THE PREFERRED EMBODIMENT

An embodiment of the present invention will be described below with reference to the accompanying drawings.

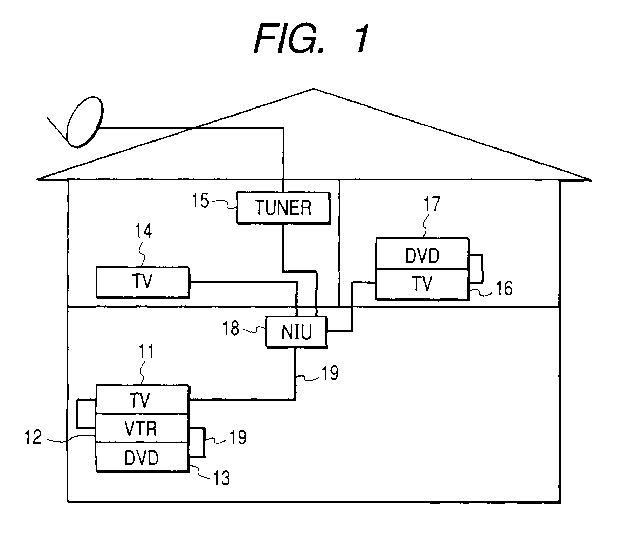

Fig. 1 is a view showing the arrangement of a home multimedia network system according to the present invention.

The system shown in Fig. 1 comprises, as electronic equipments, a television receiver 11 (to be referred to as a TV hereinafter), a TV 14, a TV 16, a video tape recorder 12 (to be referred to as a VTR hereinafter), a digital satellite tuner 15, a DVD (Digital Versatile Disc) player 13, a DVD player 17, and a network interface unit 18 (to be referred to as an NIU hereinafter).

These electronic equipments are connected by an IEEE1394 serial bus 19. Since each electronic equipment has a function of relaying serial bus electrical signals, a daisy-chain connection is possible.

The NIU 18 also has this serial bus relaying function. Therefore, serial connections in individual rooms are relayed to allow the electronic equipments shown in Fig. 1 to function as one bus system as a whole.

In the IEEE1394 bus system, data is transferred in a predetermined cycle. It is possible to perform both isochronous (synchronous) communication by which data is transmitted by keeping a constant data transfer rate and asynchronous communication by which control instructions and irregular data are transmitted.

A cycle start packet is present at the beginning of a communication cycle, and packet transmission of isochronous communication starts subsequently to this packet. This isochronous communication packet is assigned to a channel number, so a plurality of isochronous communications can be performed.

For example, a plurality of isochronous communications can be simultaneously performed when DV-format data flowing from the VTR 12 to the TV 11 uses channel 1 and MPEG2-stream data flowing from the DVD 17 to the TV 14 uses channel 2.

When isochronous communication ends, packet transmission of asynchronous communication starts. Generally, isochronous communication is used in data transfer attaching importance to real-time operation, rather than reliability, such as DV-format image data transfer and MPEG2-format image and sound stream transfer. Asynchronous communication is used in transfer of data, such as control commands and file print data, attaching importance to reliability.

AV/C (Audio Video Control) commands for controlling AV equipments are transferred by asynchronous communication. These AV/C commands include a common Control command, an Inquiry command for inquiring whether the command is supported, and a Status command for checking for the status of the communication partner. Many commands conclude by receiving corresponding data called response.

A command sender can check whether the command is normally executed, or can confirm bus status information of the communication partner, by checking the contents of the received response. In the IEEE1394 serial bus, physical addresses are assigned to individual electronic equipments connected to the bus. This physical address is automatically determined in a setting process which follows bus reset occurring when the number of connected electronic equipments increases or decreases.

Control of network connected equipments by remote-control operation using the TV 11 will be described next.

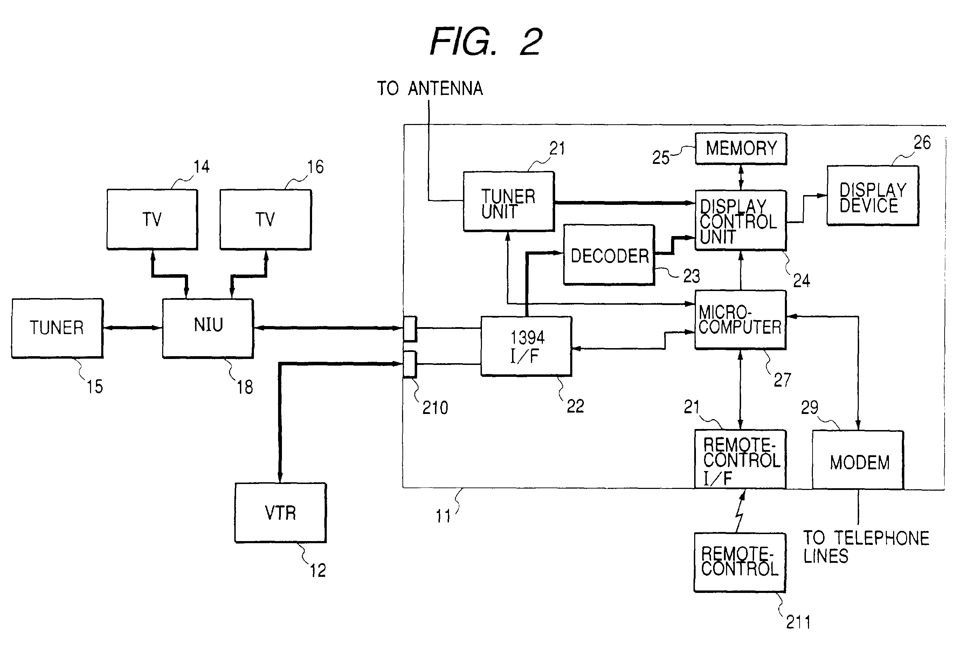

Fig. 2 is a view showing blocks constituting the TV 11.

Referring to Fig. 2, a tuner 21 receives the TV broadcast wave of a designated channel from a TV antenna, converts the received wave into a TV data stream, and decodes this stream into video data which can be displayed. Also, this tuner 21 extracts electronic program guide data multiplexed on the broadcast wave and transfers the data to a microcomputer.

A 1394 interface 22 exchanges data with the IEEE1394 bus. A decoder 23 decodes input video stream data from the IEEE1394 bus into a form which can be displayed. A display control unit 24 forms data indicating images to be displayed by a display unit 26. This display control unit 24 stores images from the tuner and images from the decoder into a memory 25 and displays these two input video signals and graphic plane data (to be described later) by superposing them, or in windows.

Furthermore, the display control unit 24 receives a rendering command from a microcomputer 27 and directly writes a graphic object, such as an icon or button, in an internal graphic plane of the memory.

The microcomputer 27 controls the whole TV 11. A remote-control interface 28 receives key codes transmitted on a wireless signal from a remote controller 211. A modem 29 performs data communication via a telephone line. Also, the IEEE1394 interface has a connector 210.

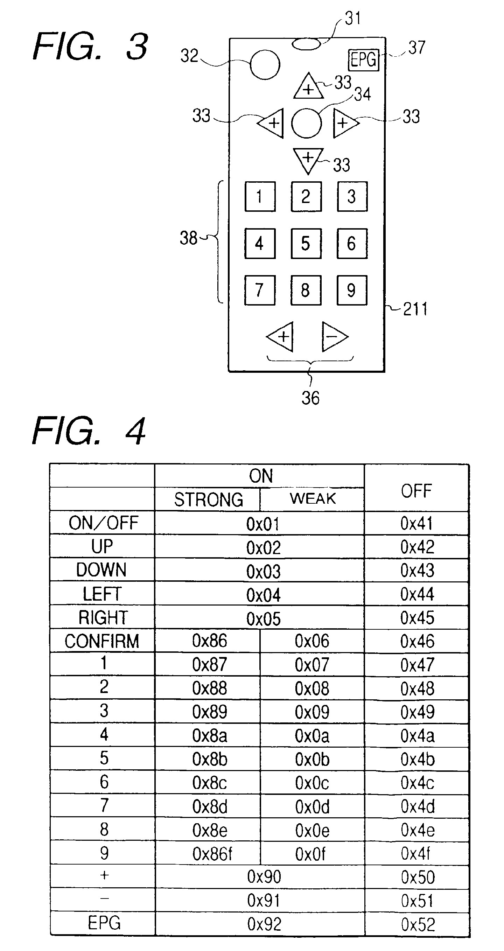

Fig. 3 shows the remote controller 211 in more detail. A wireless signal transmitter 31 outputs a signal representing a key code to the remote-control I/F 28. A power key 32 is used to designate ON/OFF of the power supply of the TV 11. This remote controller 211 also includes up, down, left, and right cursor keys 33, a confirmation key 34, and 3 × 3 numerical keys 35 on the surfaces of which numbers 1 to 9 are printed.

In the following explanation, the individual keys of this numerical key array are indicated by these printed numbers. For example, the upper left key will be called a "1" key. A volume key 36 is used to adjust the sound volume. An EPG switch 37 is used to designate display/non-display of EPG (Electronic Program Guide) as will be described later.

Some keys of the remote controller used in this embodiment are two-stroke keys; the confirmation key 34 and the "1" to "9" keys 35 are two-stroke keys. These two-stroke keys are similar to those used as shutter buttons of compact cameras and auto-focusing cameras. When a key is depressed to the first stroke, a first switch is turned on; when the key is depressed to the second stroke, a second switch is turned on.

Fig. 4 is a table showing the relationship between the state of each key of the remote controller shown in Fig. 3 and a key code to be transmitted to the TV 11. Since the confirmation key 34 and the "1" to "9" keys 35 are two-stroke keys as described above, each of these keys has two different ON states: a first-stroke state, i.e., a state in which the key is weakly depressed (or lightly touched); and a second-stroke state in which the key is strongly depressed.

For example, when the "1" key is weakly depressed, codes "0 × 07" are continuously transmitted; when this "1" key is strongly depressed, codes "0 × 87" are continuously transmitted. When the finger is let go from the key, codes "0 × 47" are transmitted. The microcomputer 27 checks for the arrangement of these codes and thereby distinguishes between the state in which the key is strongly depressed and the state in which it is weakly depressed (or lightly touched).

That is, when received codes repeat "0 × 07", "0 × 07", "0 × 07",... a predetermined number of times, the microcomputer 27 determines that the "1" key is weakly depressed. When received codes repeat "0 × 87", "0 × 87", "0 × 87", "0 × 87",..., the microcomputer 27 determines that the "1" key is strongly depressed.

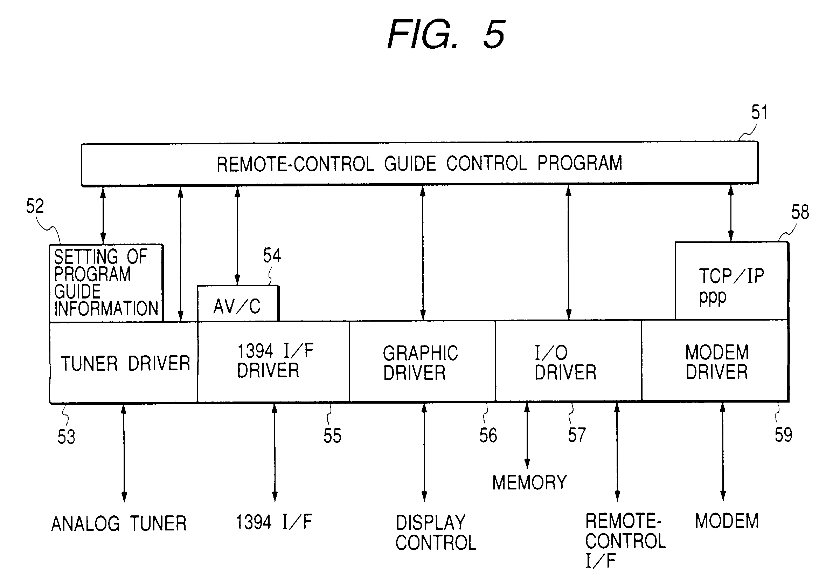

Fig. 5 is a view showing the structure of a remote-control guide control program running on the microcomputer 27. This remote-control guide control program 51 exchanges data with hardware via drivers or a software hierarchy as shown in Fig. 5.

A remote-control operation performed by the TV 11 will be described below.

On the microcomputer 27 of the TV 11, the remote-control guide control program is always running. First, a control operation performed in accordance with channel switching when a user is watching a television picture received by the tuner 21 of the TV 11 will be described.

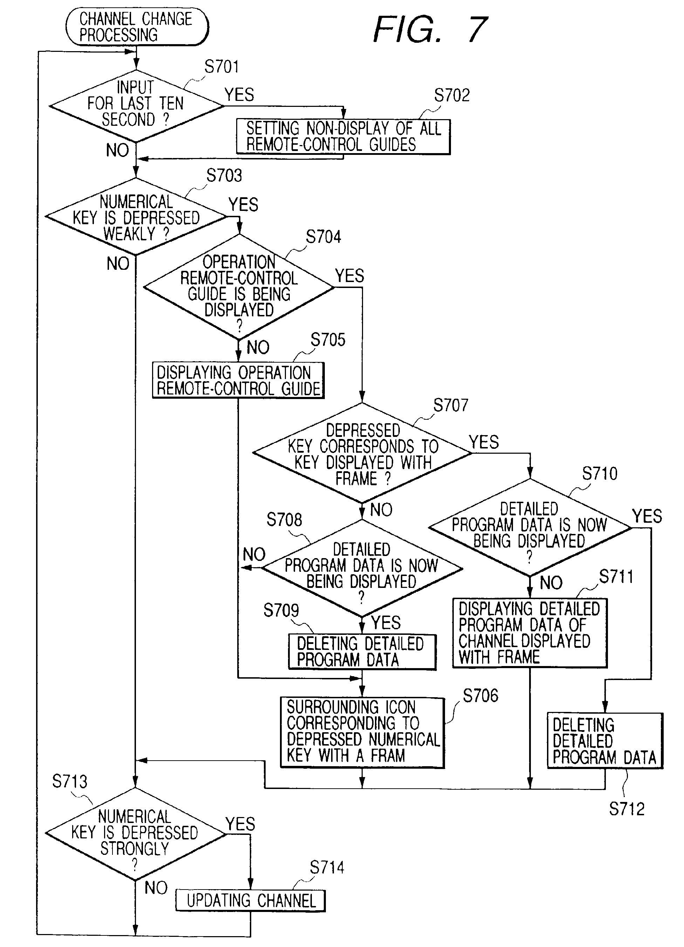

Fig. 7 is a flow chart showing the operation performed by the microcomputer 27 by using the remote-control guide control program when a picture from the tuner 21 is displayed. The flow shown in Fig. 7 can be executed during a period in which the TV 11 is ON, and is executed as interrupt processing when key codes are received from the remote controller 211.

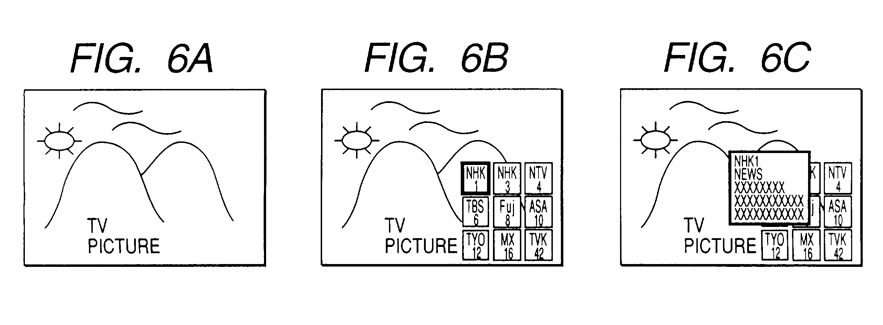

If no data transmitted from the remote controller 211 is received for last ten seconds, the microcomputer 27 sets non-display of all television operation remote-control guides (steps S701 and S702). In this state, as shown in Fig. 6A, only a television picture related to output video data from the tuner 21 is displayed on the screen of the display unit 26.

If a user weakly depresses the "1" to "9" numerical keys 35 in this state, the remote controller 211 transmits key codes as shown in Fig. 4. The remote-controller I/F 28 receives these key codes and outputs them to the microcomputer 27. The microcomputer 27 checks the received key codes. If the key codes indicate a weak depression of the numerical keys 35, the microcomputer 27 determines that one of the "1" to "9" numerical keys 35 is weakly depressed (step S703).

The microcomputer 27 checks whether the television operation remote-control guide is currently being displayed on the display unit 26 (step S704). If the guide is not being displayed, the microcomputer 27 controls the display control unit 24 to display the television operation remote-control guide as shown in Fig. 6B (step S705). The microcomputer 27 encloses an icon corresponding to the depressed numerical key with a frame (step S706).

In the remote-control guide display window, as shown in Fig. 6B, icons are displayed with an arrangement corresponding to the actual key arrangement of the remote controller. Also, marks or characters drawn on each icon allows the user to readily recognize which key is assigned with which function.

Referring to Fig. 6B, television channels are assigned to the individual keys, so characters indicating a broadcasting channel are drawn on each icon. Note that functions are assigned to the individual keys by a separately prepared remote-control key function assigning program.

If, for example, the microcomputer 27 determines on the basis of the received key codes that the "1" key is weakly depressed, the microcomputer 27 encloses an icon corresponding to the "1" key with a frame, indicating that the "1" key is weakly depressed.

That is, when the user weakly depresses one of the "1" to "9" keys, the microcomputer 27 not only displays the remote-control guide but also displays which key is depressed.

If the user strongly depresses the "1" to "9" keys in this state, the remote controller 211 transmits key codes, shown in Fig. 4, corresponding to a strong depression of the "1" to "9" keys. If the received key codes indicates a strong depression of the numerical keys 35, the microcomputer 27 immediately controls the tuner 21 to switch to a channel assigned to the key corresponding to the received key codes (steps S713 and S714).

When remote-control guide display control is performed as described above, even if the user does not know which channel is assigned to which key when operating the TV 11, he or she can confirm the key assignment by displaying the remote-control guide by only weakly depressing any key.

Also, even when the user does not remember functions assigned to the individual keys, by weakly depressing any key the user can display functions assigned to the individual keys and display an icon corresponding to the depressed key with a frame. Therefore, the user can change channels by strongly depressing a button after confirming that the button is assigned to the desired channel. This reduces operation errors.

In the television receiver of this embodiment, EPG data multiplexed on a television broadcast wave can be received by the tuner 21 and read out by the microcomputer 27. Of this EPG data, the microcomputer 27 can display detailed information (character information indicating the program name, cast, program contents, and the like) concerning a program currently being broadcast on the remote-control guide in a popup manner.

That is, if the microcomputer 27 detects in step S703 that one of the numerical keys 35 of the remote controller 211 is weakly depressed and the remote-control guide shown in Fig. 6B is already displayed on the display unit 26 in step S704, the microcomputer 27 checks whether the depressed key is the same key as already displayed with a frame in the remote-control guide (step S707).

If NO in step S707, the microcomputer 27 checks whether detailed program data is being displayed (step S708). If no detailed program data is being displayed, the microcomputer 27 encloses an icon corresponding to the depressed numerical key 35 with a frame in the remote-control guide display shown in Fig. 6B. If detailed program data is being displayed, the microcomputer 27 stops the display (step S709) and encloses an icon corresponding to the depressed numerical key 35 with a frame.

On the other hand, if the microcomputer 27 detects in step S707 that the numerical key 35 corresponding to the icon already enclosed with a frame in the remote-control guide display is again depressed, the microcomputer 27 checks whether detailed program data is being displayed (step S710).

If no detailed program data is being displayed, the microcomputer 27 checks for a channel assigned to the depressed numerical key. On the basis of the electronic program guide information described above, the microcomputer 27 controls the display control unit 24 to display detailed information of a program currently being broadcast on this channel in a popup manner (step S711). If detailed program data is already displayed in step S710, the microcomputer 27 stops the display of this detailed program data (step S712).

Fig. 6C shows a display example of the display unit 26 when detailed program information is displayed in a popup manner. The contents of Fig. 6C are displayed when the "1" key of the remote controller 211 is weakly depressed in the state shown in Fig. 6B.

This control permits the user not only to watch detailed program information by one-touch operation without using any new program detail key or the like, but also to watch detailed program information of a certain channel while watching another program.

In the television receiver of this embodiment, equipments connected to the 1394 serial bus can be controlled. A control operation for controlling an equipment connected to the network while a picture received by the tuner 21 is displayed on the TV 11 will be described below.

Fig. 9 is a flow chart showing the control operation of the microcomputer 27 in this case. Similar to Fig. 7, this flow in Fig. 9 can be executed during a period in which the TV 11 is ON, and is executed as interrupt processing when key codes are received from the remote controller 211.

Referring to Fig. 9, the microcomputer 27 so controls the display control unit 24 as to set non-display of the remote-control guide if no key codes are received from the remote controller 211 for last ten seconds (steps S901 and S905). In this case, only a television picture related to output video data from the tuner 21 is displayed, as shown in Fig. 6A, on the screen of the display unit 26.

If a user weakly depresses the confirmation key 34 in this state, key codes as shown in Fig. 4 are transmitted from the remote controller 211. The remote-control I/F 28 receives these key codes and outputs them to the microcomputer 27. The microcomputer 27 checks the received key codes. If the key codes indicate the first stroke of the confirmation key 34, the microcomputer 27 determines that the confirmation key 34 is weakly depressed (step S902).

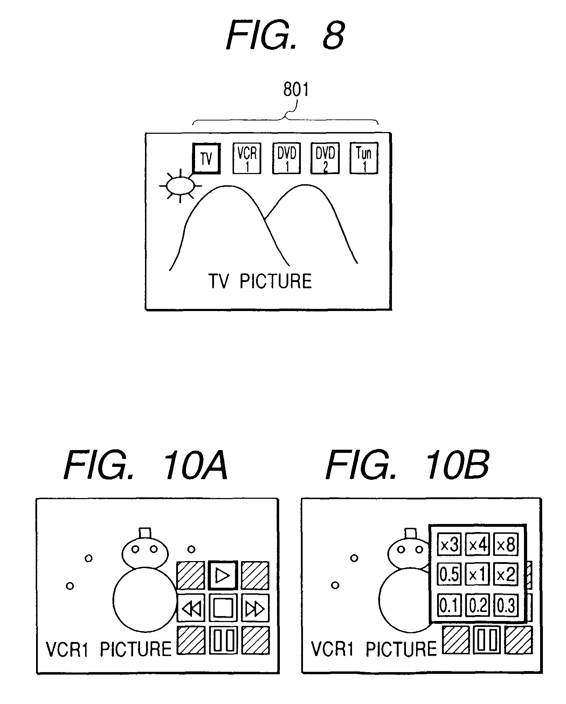

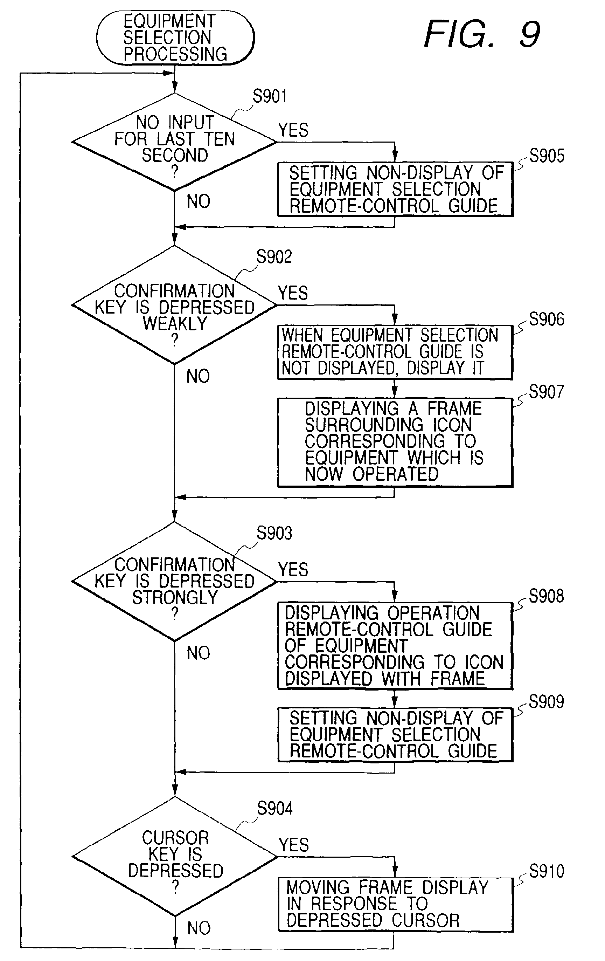

The microcomputer 27 checks whether an equipment selection remote-control guide is being displayed on the display unit 26. If this guide is not being displayed, the microcomputer 27 controls the display control unit 24 to start displaying the equipment selection remote-control guide, as shown in Fig. 8 (steps S902 and S906).

In the display of this equipment selection remote-control guide, as shown in Fig. 8, icons 801 are arranged regardless of the arrangement of the numerical keys 35 of the remote controller 211. On each icon, the name of equipment on the 1394 bus, which can be remotely operated from the TV 11, is displayed.

The microcomputer 27 thus displays the equipment selection remote-control guide and also displays a frame around an icon of the equipment currently being selected (step S907). If the confirmation key 34 is not strongly depressed (S903) but the left or right cursor key 33 is depressed (S904) in this state, the microcomputer 27 moves the frame to another icon shown in Fig. 8. If the microcomputer 27 detects that the confirmation key 34 is strongly depressed while the equipment selection remote-control guide shown in Fig. 8 is displayed, the microcomputer 27 so controls the display control unit 24 as to display an operation remote-control guide of an equipment corresponding to the icon currently being displayed with the frame.

For example, if the user operates the cursor key 33 to move the frame to an icon of a VTR and then strongly depresses the confirmation key 34, the microcomputer 27 controls the 1394 I/F 22 to display a picture pertaining to video data supplied from the VTR 12 as shown in Fig. 10B, and also controls the display control unit 24 to display a VTR operation remote-control guide (steps S903, S908, and S909).

After displaying the operation remote-control guide of the VTR 12 shown in Fig. 10A, the microcomputer 27 automatically assigns operation functions of the VTR 12 to the numerical keys 35 of the remote-controller 211. For example, the microcomputer 27 assigns "tape playback start", "stop", "rewind", "fast forward", and "pause" to the "2", "5", "4", "6", and "8" keys, respectively. Assume that no functions are assigned to hatched keys in Fig. 10A.

In this remote-control guide, a function assigned to each key is displayed on a corresponding icon. For example, a mark indicating the playback start function is displayed on the "2" key, and a mark indicating the rewind function is displayed on the "3" key.

An operation when the operation remote-control guide of the VTR 12 is displayed as shown in Fig. 10A will be described below.

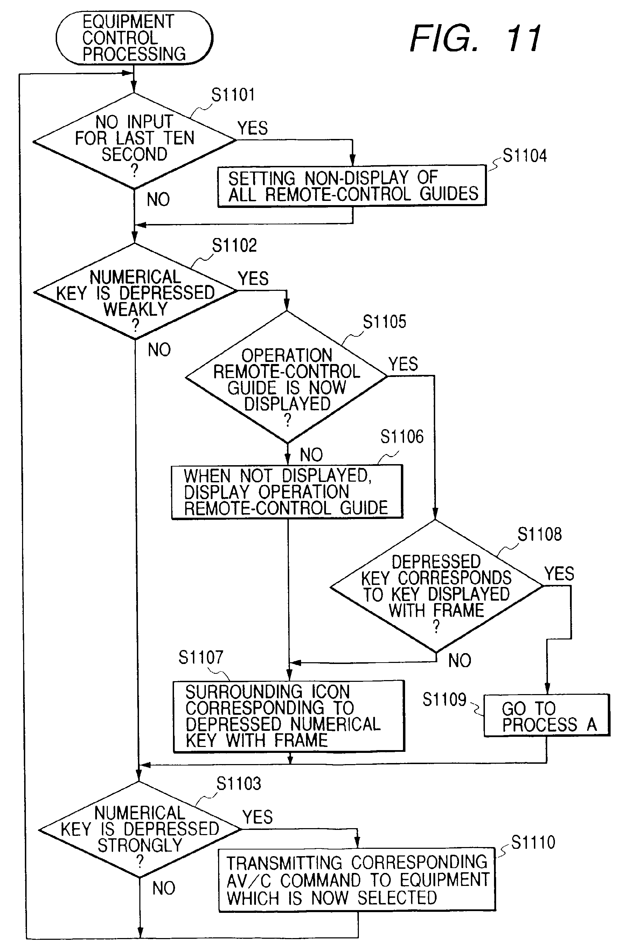

Fig. 11 is a flow chart showing the control operation of the microcomputer 27 when the operation remote-control guide of the VTR 12 is displayed. This flow shown in Fig. 11 can be executed during a period in which control of an equipment connected to the network is designated by the flow shown in Fig. 9, and is executed as interrupt processing when key codes are received from the remote controller 211.

Referring to Fig. 11, the microcomputer 27 sets non-display of all remote-control guides if no data transmitted from the remote controller 211 is received for last ten seconds (steps S1101 and S1104). In this state, only a television picture related to output video data from a selected equipment, the VTR 12 in this case, is displayed on the screen of the display unit 26.

If a user weakly depresses the "1" to "9" numerical keys 35 in this state, the remote controller 211 transmits key codes as shown in Fig. 4. The remote-control I/F 28 receives these key codes and outputs them to the microcomputer 27. The microcomputer 27 checks the receives key codes. If the key codes indicate a weak depression of the numerical keys 35, the microcomputer 27 determines that one of the "1" to "9" numerical keys 35 is weakly depressed (step S1102).

The microcomputer 27 checks whether the equipment operation remote-control guide is currently being displayed on the display unit 26. If the guide is not being displayed, the microcomputer 27 controls the display control unit 24 to start displaying the equipment operation remote-control guide as shown in Fig. 10A (steps S1105 and S1106).

In this remote-control guide display, as shown in Fig. 10A, icons are displayed with an arrangement corresponding to the actual key arrangement of the remote controller. Also, marks or characters drawn on each icon allow the user to readily recognize which key is assigned with which function.

If, for example, the microcomputer 27 determines on the basis of the received key codes that the "2" key is weakly depressed, the microcomputer 27 encloses with a frame an icon corresponding to the "2" key, an icon indicating "playback start" in Fig. 10A, thereby indicating that the "2" key is weakly depressed (step S1107).

That is, when the user weakly depresses one of the "1" to "9" keys, the microcomputer 27 not only displays the remote-control guide but also displays which key is depressed.

If the user strongly depresses the "1" to "9" keys in this state, the remote controller 211 transmits key codes, shown in Fig. 4, corresponding to the second stroke of the "1" to "9" keys. If the received key codes indicate the second stroke of the numerical keys 35, the microcomputer 27 controls the 1394 I/F 22 to transmit an AV/C command for executing a function assigned to the operated key to the selected equipment, the VTR 12 (step S1110) in this case.

When an equipment connected to the network is operated by the TV 11 by performing remote-control guide display control as described above, even if the user does not know which channel is assigned to which key, he or she can confirm the key assignment by displaying the equipment operation remote-control guide by only weakly depressing any key.

Also, even when the user does not remember functions assigned to the individual keys, by weakly depressing any key the user can display functions assigned to the individual keys and display an icon corresponding to the depressed key with a frame. Therefore, the user can actually control the equipment by strongly depressing a button after confirming that the button is assigned to the desired channel. This reduces operation errors.

In this embodiment, if the key whose icon is already displayed with a frame is again depressed to the first stroke in the state shown in Fig. 10A, a new remote-control guide is displayed in a popup manner such that optional parameters of the corresponding control function can be selected.

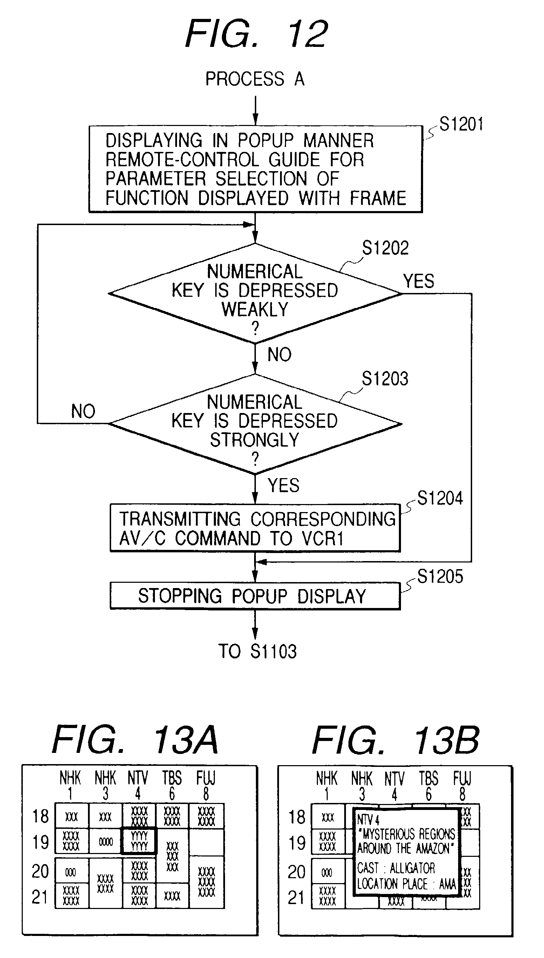

This optional parameter display control will be described below with reference to a flow chart in Fig. 12. If in step S1108 in Fig. 11 the microcomputer 27 detects that a key whose icon is already displayed with a frame is depressed to the first stroke while the equipment control remote-control guide is displayed, the microcomputer 27 executes the flow of process A shown in Fig. 12.

Referring to Fig. 12, if a key whose icon is already displayed with a frame is depressed to the first stroke, the microcomputer 27 controls the display control unit 24 to display a remote-control guide for selecting optional parameters of the function displayed with the frame (step S1201).

For example, a playback function of the VTR 12 is assigned to the "2" key in Fig. 10A. If a user weakly depresses the "2" key while the equipment operation remote-control guide is displayed, an icon corresponding to the "2" key is enclosed with a frame. If the user again "weakly" depresses the "2" key, the microcomputer 27 displays a remote-control guide for selecting the playback speed in a popup manner as shown in Fig. 10B.

Also in this operational parameter remote-control guide displayed in a popup manner, icons are displayed with an arrangement corresponding to the actual key arrangement on the remote controller 211. That is, in Fig. 10B, the "1" key corresponds to the function of threefold-speed playback, and the "2" key corresponds to the function of fourfold-speed playback.

If one of the numerical keys 35 is weakly depressed in this state (step S1202), the microcomputer 27 controls the display control unit 24 to erase the optional parameter popup display and restores the display shown in Fig. 10A (step S1205). If one of the numerical keys 35 is strongly depressed in the state shown in Fig. 10B (step S1203), the microcomputer 27 controls the 1394 I/F 22 to output an AV/C command to the equipment to be operated, in order to execute a function corresponding to the strongly depressed numerical key (step S1204), and stops the popup display.

For example, if the user "strongly" depresses the "3" key of the remote controller 211 in the state shown in Fig. 10B, the microcomputer 27 controls the 1394 I/F 22 to output a command to the VTR 12 in order to start eightfold-speed playback, and stops the popup display.

By this remote-control guide display control, frequently used operation commands are assigned to the remote-control keys, and the user can realize most of usual operations by strongly depressing these keys. Also, special playback such as double-speed playback can be executed by a few key actions of lightly depressing one of these keys to display a guide in a popup manner and selecting playback parameters from the guide, without adding any new keys.

The television receiver of this embodiment has an EPG display function of displaying a program list on the basis of received EPG data, and a user can search this program list for a program which he or she wants to watch. When the EPG key 37 of the remote controller 211 is operated, the microcomputer 27 generates an EPG picture on the basis of output EPG data from the tuner 21, and so controls the display control unit 24 as to display this EPG picture. Fig. 13A shows an example of the EPG picture.

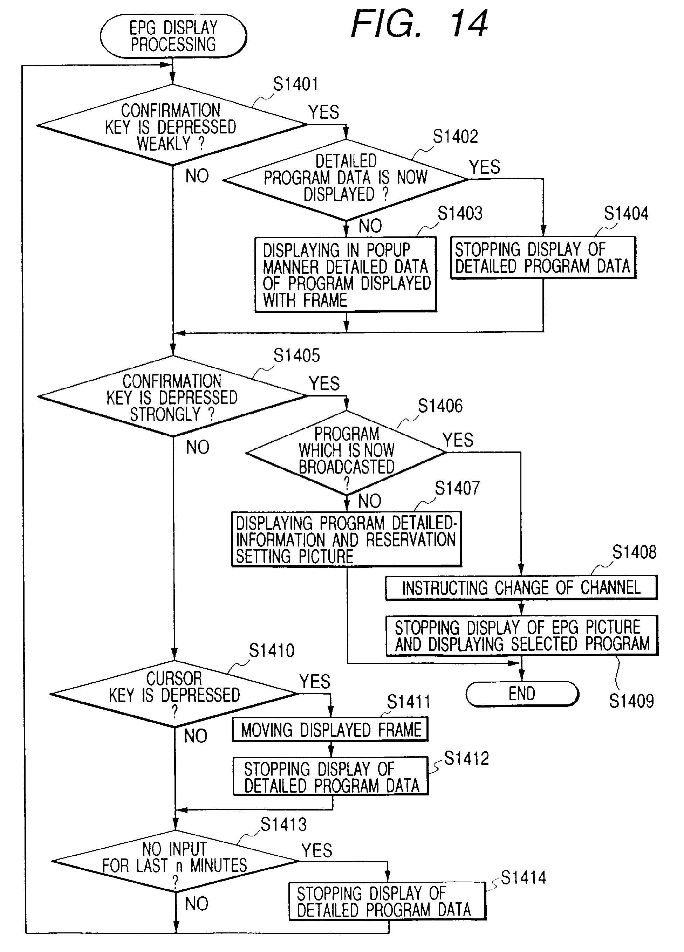

The operation of the microcomputer 27 in EPG picture display processing will be described below with reference to a flow chart shown in Fig. 14. Fig. 14 is a flow chart showing the operation performed by the microcomputer 27 in the EPG display processing.

As shown in Fig. 13A, in the EPG picture an icon of a given one of a plurality of programs is enclosed with a frame to indicate that this program is selected. In the flow chart shown in Fig. 14, if a user weakly depresses the confirmation key 34 of the remote controller 211 while this EPG picture is displayed on the display unit 26, the microcomputer 27 detects the program displayed with the frame (step S1401).

The microcomputer 27 checks whether detailed program data (to be described later) is being displayed (step S1402). If the data is not being displayed, the microcomputer 27 controls the display control unit 24 to display, in a popup manner, more detailed data of the program displayed with the frame, i.e., the program selected by the user, from the output EPG data from the tuner 21 (step S1403). If the detailed program data is already displayed, the microcomputer 27 stops the display (step S1404).

In this embodiment, to display a program list of as many programs and channels as possible, the normal EPG picture can display simple information, such as the broadcasting time, title, and main cast, of each individual program. Therefore, by a simple operation of weakly depressing the confirmation key 34, the user can confirm more detailed information on a selected program, e.g., a simple explanation of the story of a drama, the contents of a principal article of news, or the like, without erasing the EPG picture.

If the user strongly depresses the confirmation key 34 while the EPG picture is displayed (step S1405), the microcomputer 27 compares the broadcasting time of a program displayed with a frame with the present time to check whether the program is currently being broadcast (step S1406).

If the selected program is currently being broadcast, the microcomputer 27 controls the tuner 21 to switch to the channel of that program (step S1408), and controls the display control unit 24 to erase the EPG picture and display the picture of the selected program on the full screen of the display unit 26 (step S1409).

If the selected program is not currently being broadcast, the microcomputer 27 controls the display control unit 24 to display detailed information of the program and a picture for setting reservation recording, and leaves this flow (step S1407).

If the user depresses the up, down, left, or right cursor key 33 while the EPG picture is displayed (step S1410), the microcomputer 27 controls the display control unit 24 to move the frame on the EPG picture (step S1411). If the detailed program data is being displayed, the microcomputer 27 stops the display (step S1412).

If no instruction is input from the operation keys for last n minutes, in this embodiment last five minutes (step S1413), the microcomputer stops displaying the detailed program data if it is being displayed (step S1414).

This remote-control guide display control allows a user to check detailed information of each program on the EPG picture by one-touch operation while watching the EPG, without adding any new keys such as a "program detail key".

In the above explanation, an icon is enclosed with a frame by a remote-control guide to indicate that the icon is selected. However, it is of course also possible to, e.g., change the color of the selected icon.

In the embodiment of the present invention as has been described above, the display unit is incorporated into the television receiver. However, the present invention is not restricted to this arrangement in its substance. For example, similar effects can be obtained by a set top box having no display unit.

Also, in this embodiment the IEEE1394 is used as the basic technology of the network. However, the present invention is not limited to this technology in its substance. That is, similar effects can be obtained by an analogous bus system or network system.

Furthermore, this embodiment has been described using a "two-stroke button having two, strong and weak ON states" used in a camera and the like. However, a button having two ON states of "lightly touched/strongly depressed" can also be used.

The present invention can be applied to a system constituted by a plurality of devices (e.g., a host computer, interface, reader, and printer) or to an apparatus comprising a single device.

Further, the present invention includes a case in which program codes of software for performing the functions of the above embodiment are supplied to an internal computer of an apparatus or system connected to various devices to operate these devices in order to realize the functions of the embodiment, and the devices are operated in accordance with the program codes stored in the computer (e.g., a CPU or MPU) of the system or apparatus.

In this case, the program codes of the software realize the functions of the above embodiment, so the program codes themselves and a means for supplying the program codes to the computer, e.g., a storage medium storing the program codes constitute the invention. As this storage medium for storing the program codes, it is possible to use, e.g., a floppy disk, hard disk, optical disk, magnetooptical disk, CD-ROM, magnetic tape, nonvolatile memory card, or ROM.

Furthermore, besides a computer realizes the aforesaid functions according to the above embodiment by executing program codes supplied to the computer, the present invention includes a case in which the program codes realize the functions of the above embodiment in cooperation with an OS (Operating System) or another application software running on the computer.

Furthermore, the present invention also includes a case where, after supplied program codes are stored in a memory of an internal function extension board of a computer or in a memory of a function extension unit connected to the computer, a CPU or the like of the function extension board or function extension unit performs a part or the whole of actual processing in accordance with designations by the program codes and realizes the functions of the above embodiments.

In this embodiment as has been described above, various operations in a home network environment can be realized by using a remote controller of a TV receiver without increasing the number of remote-control keys. Additionally, the processing can be performed very rapidly.

More specifically, user operation errors can be greatly reduced when functions are dynamically assigned to remote-control keys, which is particularly the object of the present invention. This is so because two-stroke buttons of a remote controller are related to control of display/non-display of remote-control guides and to control of display of a frame which indicates selection. That is, a user can perform an actual operation after confirming the item which he or she has chosen.

Also, when the collaboration of the two-stroke keys with the control of remote-control guide display on the screen is further advanced, a user can simply display detailed information of a program while watching the television or checking an electronic program guide, only by performing a few key actions without increasing the number of keys.

This allows diverse special playback functions to be executed while AV equipments are in operation. Furthermore, in various situations related to a television receiver in a home network environment, both of diverse functions and the ease of use can be achieved by a simple remote controller.

Many widely different embodiments of the present invention may be constructed without departing from the spirit and scope of the present invention. It should be understood that the present invention is not limited to the specific embodiments described in the specification, except as defined in the appended claims.

## Claims

1. An apparatus controlled by an operation device including a plurality of operation keys assigned to different functions and each having first and second ON states, comprising:
detecting means for detecting operation states of said plurality of keys;
display control means for controlling a display operation of a display device on the basis of a detection result from said detecting means,
said display control means controlling said display device to display information indicating functions of said plurality of operation keys in response to that any one of said plurality of operation keys is set in the first ON state; and
operation control means for controlling an operation of said apparatus in accordance with a detection result from said detecting means,
wherein in response to that any one of said plurality of operation keys is set in the second ON state, said operation control means controls an operation of said apparatus so as to execute a function assigned to said operation key in the second ON state.

2. An apparatus according to claim 1, wherein said display control means generates a display window on the basis of the arrangement of said plurality of operation keys on said operation device.

3. An apparatus according to claim 2, wherein said display control means generates the display window in which a plurality of icons indicating functions of said plurality of operation keys are arranged in positions corresponding to the positions of said plurality of operation keys on said operation device.

4. An apparatus according to claim 1, wherein said display control means displays a plurality of icons corresponding to said plurality of operation keys, and sets one of the plurality of icons, which corresponds to an operation key in the first ON state, in a predetermined display state.

5. An apparatus according to claim 4, wherein when said operation key corresponding to the icon in the predetermined display state is again set in the first ON state, said display control means controls said display device to further display additional information concerning a function of said operation key in the first ON state.

6. An apparatus according to claim 5, wherein
said operation control means controls an operation of another apparatus, the plurality of functions including a function of another apparatus, and
the additional information includes an optional parameter concerning the function of the other apparatus.

7. An apparatus according to claim 1, further comprising receiving means for receiving a television signal containing video data indicating a plurality of programs,
wherein said display control means display a picture related to the television signal received by said receiving means on said display device, and
wherein the plurality of functions include a function of switching channels of the television signal.

8. An apparatus according to claim 7, wherein said display control means generates the display window in which a plurality of icons indicating functions of said plurality of operation keys are arranged in positions corresponding to positions of said plurality of operation keys on said operation device, and, when any one of said plurality of operation keys corresponding to the plurality of icons is again set in the first ON state, said display control means displays additional information concerning a channel corresponding to said operation key in the first ON state.

9. An apparatus according to claim 8, wherein said display control means extracts guide information of a plurality of programs from the television signal, and generates the additional information on the basis of the extracted guide information.

10. An apparatus according to claim 1, wherein said operation control means controls an operation of another apparatus, and the plurality of functions include a function of the other apparatus.

11. An apparatus according to claim 10, wherein said operation control means outputs a control signal to the other apparatus in accordance with a function assigned to an operation key set in the second ON state.

12. An apparatus controlled by an operation device having a plurality of operation keys assigned to different functions and each having first and second ON states, said operation device outputting key codes corresponding to operation states of said plurality of operation keys, comprising:
receiving means for receiving an output key code from said operation device;
display control means for controlling a display device to display information indicating functions of said plurality of operation keys in response to that said receiving means receives a key code indicating the first ON state; and
operation control means for controlling said apparatus to execute a function assigned to an operation key corresponding to the received key code in response to that said receiving means receives a key code indicating the second ON state.

13. An apparatus according to claim 12, wherein said display control means generates a display window on the basis of the arrangement of said plurality of operation keys on said operation device.

14. An apparatus according to claim 13, wherein said display control means generates the display window in which a plurality of icons indicating functions of said plurality of operation keys are arranged in positions corresponding to the positions of said plurality of operation keys on said operation device.

15. An apparatus according to claim 12, wherein said display control means displays a plurality of icons corresponding to said plurality of operation keys, and sets one of the plurality of icons, which corresponds to an operation key corresponding to a key code indicating the first ON state, in a predetermined display state.

16. An apparatus according to claim 15, wherein when said receiving means receives a key code indicating the first ON state of said operation key corresponding to the icon in the predetermined display state, said display control means controls said display device to further display additional information concerning a function of said operation key in the first ON state.

17. An apparatus according to claim 16, wherein
said operation control means controls an operation of another apparatus, the plurality of functions include a function of the other apparatus, and
the additional information includes an optional parameter concerning the function of the other apparatus.

18. An apparatus according to claim 12, further comprising receiving means for receiving a television signal containing video data indicating a plurality of programs,
wherein said display control means displaying a picture related to the television signal received by said receiving means on said display device, and
wherein the plurality of functions include a function of switching channels of the television signal.

19. An apparatus according to claim 18, wherein when said receiving means receives a key code indicating the first ON state of a predetermined one of said plurality of operation keys, said display control means displays additional information concerning a channel corresponding to said predetermined operation key.

20. An apparatus according to claim 19, wherein said display control means extracts guide information of a plurality of programs from the television signal, and generates the additional information on the basis of the extracted guide information.

21. An apparatus according to claim 12, wherein said operation control means controls an operation of another apparatus, and the plurality of functions include a function of the other apparatus.

22. An apparatus according to claim 21, wherein said operation control means outputs a control signal to the other apparatus in accordance with a function assigned to an operation key set in the second ON state.

23. A television receiver controlled by an operation device having a plurality of operation keys assigned functions of switching to different channel numbers and each having first and second ON states, comprising:
input means for inputting a television signal;
display control means for outputting a picture related to the television signal to a display device,
said display control means controlling said display device to display information indicating channels assigned to said plurality of operation keys in response to that any one of said plurality of operation keys is set in the first ON state; and
operation control means for controlling said input means to switch to a channel assigned to said operation key in the second ON state in response to that any one of said plurality of operation keys is set in the second ON state.

24. A television receiver controlled by an operation device including an operation key having first and second operation states, comprising:
input means for inputting a television signal having a plurality of channels each including a plurality of programs;
display control means for displaying pictures related to video data of the plurality of programs and a program guide pertaining to the plurality of programs on a display device,
said display control means controlling said display device to display additional information concerning a selected one of the plurality of programs contained in the program guide in response to that said operation key is set in the first operation state; and
operation control means for controlling said input means to switch to a channel of the selected program in response to that said operation key is set in the second operation state.

25. A television receiver for controlling an operation of another apparatus in accordance with a control command from an operation device having a plurality of operation keys assigned to different control functions and each having first and second ON states, comprising:
input means for inputting a television signal;
display control means for outputting a picture related to the television signal to a display device,
said display control means controlling said display device to display information indicating functions assigned to said plurality of operation keys in response to that any one of said plurality of operation keys is set in the first ON state; and
operation control means for outputting a control signal to the other apparatus, in response to that any one of said plurality of operation keys is set in the second ON state, to execute a function assigned to said operation key in the second ON state.

26. An apparatus controlled by a remote-control device having a plurality of operation keys assigned to different functions and each having first and second ON states,
wherein functions of said plurality of operation keys are displayed when any one of said plurality of operation keys is set in the first ON state, and
when any one of said plurality of operation keys is set in the second ON state, a function assigned to said operation key in the second ON state is executed.

27. A method of controlling a predetermined apparatus controlled by an operation device having a plurality of operation keys assigned to different functions and each having first and second ON states, comprising:
the display control step of controlling a display device to display information indicating functions of said plurality of operation keys in response to that any one of said plurality of operation keys is set in the first ON state; and
the operation control step of controlling an operation of said predetermined apparatus to execute a function assigned to said operation key in the second ON state in response to that any one of said plurality of operation keys is set in the second ON state.

28. A method according to claim 27, wherein the display control step comprises a step of generating a display window on the basis of the arrangement of said plurality of operation keys on said operation device.

29. A method according to claim 28, wherein the display control step comprises a step of generating the display window in which a plurality of icons indicating functions of said plurality of operation keys are arranged in positions corresponding to the positions of said plurality of operation keys on said operation device.

30. A method according to claim 27, wherein the display control step comprises a step of displaying a plurality of icons corresponding to said plurality of operation keys, and a step of setting one of the plurality of icons, which corresponds to an operation key in the first ON state, in a predetermined display state.

31. A method according to claim 30, wherein the display control step comprises a step of controlling said display device, in response to that said operation key corresponding to the icon in the predetermined display state is again set in the first ON state, to further display additional information concerning a function of said operation key in the first ON state.

32. A method according to claim 31, wherein
the operation control step comprises a step of controlling an operation of another apparatus, the plurality of functions include a function of the other apparatus, and
wherein the additional information includes an optional parameter concerning the function of the other apparatus.

33. A method according to claim 27, wherein
the display control step comprises a step of displaying on said display device a picture related to a television signal received by receiving means of said predetermined apparatus, and
wherein the plurality of functions include a function of switching channels of the television signal.

34. A method according to claim 33, wherein the display control step comprises a step of generating the display window in which a plurality of icons indicating functions of said plurality of operation keys are arranged in positions corresponding to positions of said plurality of operation keys on said operation device, and displaying, when any one of said plurality of operation keys corresponding to the plurality of icons is again set in the first ON state, additional information concerning a channel corresponding to said operation key in the first ON state.

35. A method according to claim 34, wherein the display control step comprises a step of extracting guide information of a plurality of programs from the television signal, and a step of generating the additional information on the basis of the extracted guide information.

36. A method according to claim 27, wherein the operation control step comprises a step of controlling an operation of another apparatus, and wherein the plurality of functions include a function of the other apparatus.

37. A method according to claim 36, wherein the operation control step comprises a step of outputting a control signal to the other apparatus in accordance with a function assigned to an operation key set in the second ON state.

38. A remote control device for controlling a television receiver including a plurality of keys each assigned to different functions and each key having first and second ON states whereby by selective depression of a key can cause a television receiver associated with the device to display data or carry out an operational function.
